Europäisches Patentamt

European Patent Office

Office européen des brevets

(11) Publication number: **0 336 422**
**A2**

## EUROPEAN PATENT APPLICATION

(21) Application number: 89106079.0

(22) Date of filing: 06.04.89

(51) Int. Cl.⁴: **G11B 5/53**

(30) Priority: 08.04.88 JP 48037/88 U

(43) Date of publication of application:
**11.10.89 Bulletin 89/41**

(84) Designated Contracting States:
**DE GB**

(71) Applicant: **SHARP KABUSHIKI KAISHA**
**22-22 Nagaike-cho Abeno-ku**
**Osaka 545(JP)**

(72) Inventor: **Usui, Nobuyuki**
**Oriebi-Kopo, C-202, 700-1 Matsugaoka**
**Nagareyama-shi Chiba-ken(JP)**
Inventor: **Kajita, Nobuyuki**
**Romane-Shinkashiwa B-202, 1-15**
**Shinkashiwa**
**Kashiwa-shi Chiba-ken(JP)**
Inventor: **Katayama, Hironobu**
**232-22, Seto**
**Noda-shi Chiba-ken(JP)**

(74) Representative: **Patentanwälte TER MEER -**
**MÜLLER - STEINMEISTER**
**Mauerkircherstrasse 45**
**D-8000 München 80(DE)**

(54) Magnetic head carrier drum assembly.

(57) A head carrier drum assembly in a magnetic tape recording and/or reproducing apparatus, which assembly comprises rotary and stationary drums of equal outer diameter, the rotary drum being mounted on a drive shaft for rotation together therewith while the stationary drum has a cylindrical center sleeve integral therewith and extending in coaxial relation with the drive shaft around the drive shaft through at least two spaced apart radial bearings, at least one magnetic transducing head carried by the one of the rotary drum for rotation together therewith, and a rotary transformer including cylindrical rotary and stator cores for electrically interfacing between the magnetic transducing head and an external electric circuit. The radial bearings are interposed between an outer peripheral surface of the drive shaft and an inner peripheral surface of the sleeve. The cylindrical stator core of the rotary transformer is fitted to the inner peripheral surface of the sleeve while extending between the radial bearings and the cylindrical rotor core of the rotary transformer is mounted direct on the peripheral surface of the drive shaft in face-to-face relationship with the stator core.

*Fig. 4*

## MAGNETIC HEAD CARRIER DRUM ASSEMBLY

### BACKGROUND OF THE INVENTION

#### 1. Field of the Invention

The present invention generally relates to a helical scan magnetic recording and/or reproducing apparatus such as, for example, a video tape recorder and a video camera, and, more particularly, to a head carrier drum assembly carrying one or more magnetic recording and/or reproducing heads.

#### 2. Description of the Prior Art

As is well known to those skilled in the art, the helical scan magnetic recording and/or reproducing apparatus makes use of a head carrier drum assembly around which a length of magnetic recording tape is wrapped for movement slantwise relative to the plane of rotation of at least one magnetic recording and/or reproducing head (hereinafter referred to as magnetic head). In general, the prior art head carrier drum assembly comprises stationary and rotary drums of precisely equal outer diameter, positioned one above the other, and at least one magnetic head carried by the rotary drum for rotation together therewith while exposed to the outside through a gap between the stationary and rotary drums. The head carrier drum assembly includes at least one rotary transformer for interfacing between the rotating magnetic head and an external electric circuit system, which rotary transformer is composed of rotary and stationary transformer components that are carried by the rotary and stationary drums, respectively.

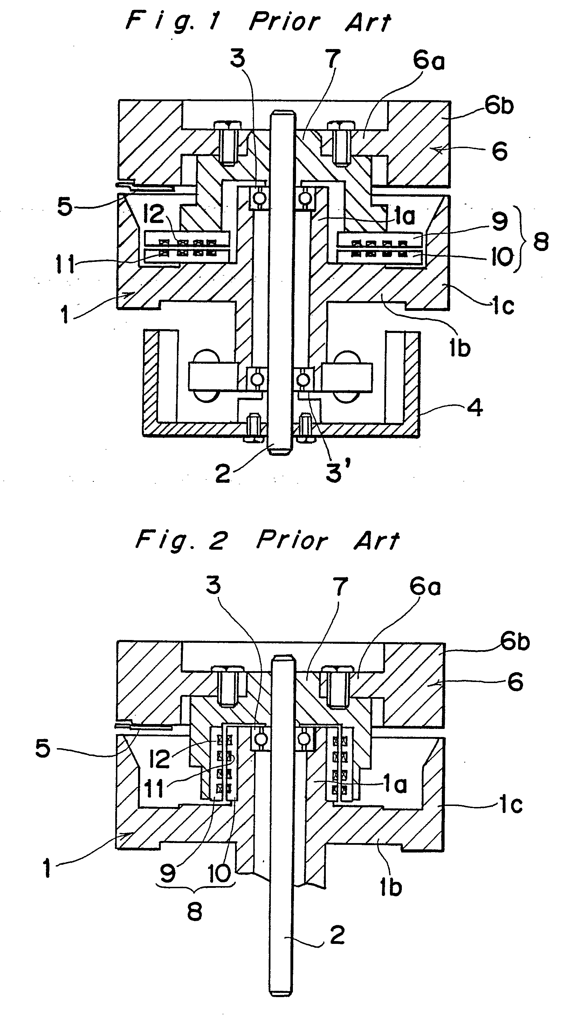

The head carrier drum assembly now in use is available in various models, some of which will now be discussed in detail with the aid of some of the accompanying drawings, namely, Figs. 1 to 3 all illustrating the prior art head carrier drum assemblies in longitudinal sectional representation, in which like parts are designated by like reference numerals.

Referring first to Fig. 1, the head carrier drum assembly shown therein comprises the stationary and rotary drums identified respectively by 1 and 6 and makes use of a single rotary transformer 8 composed of the stationary and rotary transformer components identified respectively by 10 and 9. The stationary drum 1 comprises a cylindrical sleeve 1a having a radial flange 1b protruding radially outwardly from the sleeve 1a and an axial flange 1c protruding from the outer periphery of the radial flange 1b in a direction parallel to the sleeve 1b and towards the rotary drum 6 and is mounted on a drive shaft 2 for rotation independently of the drive shaft 2 by means of upper and lower radial bearings 3 and 3′. These radial bearings 3 and 3 are positioned adjacent the opposite ends of the cylindrical sleeve 1a and housed within an annular space between the drive shaft and the cylindrical sleeve 1a.

The rotary drum 6 comprises a radial flange 6a extending radially with respect to the drive shaft 2 and an axial flange 6b protruding from the outer periphery of the radial flange 6a in a direction parallel to the drive shaft 2 and having an outer diameter precisely equal to the outer diameter of that of the axial flange 1c of the stationary drum 1. The rotary drum 6 is mounted on and connected rigid with a generally disc-shaped mount 7 which is rigidly mounted on an upper end of the drive shaft 2 for rotation together therewith. Alternatively, the mount 7 may be an integral part of the rotary drum 6.

The magnetic head identified by 5 is secured to the axial flange 6b of the rotary drum 6 and is positioned between the rotary and stationary drums 6 and 1 with a tip thereof exposed to the outside of the drum assembly for scanning a length of magnetic recording tape (not shown) in a manner well known to those skilled in the art.

The stationary transformer component or stator core 10 having windings 11 generally embedded therein is in the form of an annular flat plate and is mounted on the stationary drum 1 and seated within an annular cavity defined by the cylindrical sleeve 1a, the radial flange 1b and the axial flange 1c. On the other hand, the rotary transformer component or rotor core 9 having counterpart windings 12 embedded therein is also in the form of an annular flat plate and is secured to the mount 7 so as to protrude into the cavity in the stationary drum 1 with the windings 12 aligned with and confronting the associated windings 11 in the stator core 10. The space between the stator and rotor cores 10 and 9 of the rotary transformer 8 is generally precisely controlled to a very slight distance.

A lower end of the drive shaft 2 is drivingly coupled with a drive motor 4 so that the rotation of the drive shaft 2 can result in rotation of the rotary drum 6 relative to the stationary drum 1.

In the example shown in Fig. 1, both of the stator and rotor cores 10 and 9 jointly forming the rotary transformer 8 are laid horizontal in a plane perpendicular to the drive shaft 2 and are positioned radially outwardly of the drive shaft 2 with the cylindrical sleeve 1a intervening between the stator and rotor cores 10 and 9 and the drive shaft 2.

In the example shown in Fig. 2, each of the stator and rotor cores 10 and 9 is in the form of a hollow cylinder, the stator core 10 having an outer diameter slightly smaller than the inner diameter of the rotor core 9. The cylindrical stator core 10 is rigidly mounted on one end portion of the sleeve 1a adjacent the radial bearing 3 with the windings 11 facing radially outwardly therefrom, whereas the cylindrical rotor core 9 is rigidly carried by the mount 7 so as to assume an coaxially aligned relationship with the cylindrical stator core 10.

Even in this example of Fig. 2, both of the stator and rotor cores 10 and 9 jointly forming the rotary transformer 8 are, although oriented axially of the drive shaft 2, positioned radially outwardly of the drive shaft 2 with the cylindrical sleeve 1a intervening between the stator and rotor cores 10 and 9 and the drive shaft 1a.

While in any one of the prior art head carrier drum assembly only one rotary transformer 8 is employed, the necessity often arises to use an increased number of magnetic heads (hence, an increased number of channels) to be mounted on the rotary drum 6 for the purpose of allowing the magnetic tape player to have various functions necessary to accomplish special reproducing effects and/or editing effects.

Where the number of channels used in the magnetic tape player is to be increased, it is necessary to increase the number of grooves defined in each of the stator and rotor cores 10 and 9 where the respective windings 12 or 11 are embedded, with increase in number of the magnetic heads 5 used. In order for the increased number of the grooves to be accommodated in each of the stator and rotor cores 10 and 9, one method can be contemplated to narrow the space between each neighboring grooves in each core 10 or 9 to provide an ample space for the accommodation of the increased number of the grooves. However, the excessive narrowing of the space between each neighboring grooves in each core may result in an increase in amount of cross-talk noises occurring between the neighboring channels and, therefore, the extent to which the neighboring grooves in each core can be narrowed is limited.

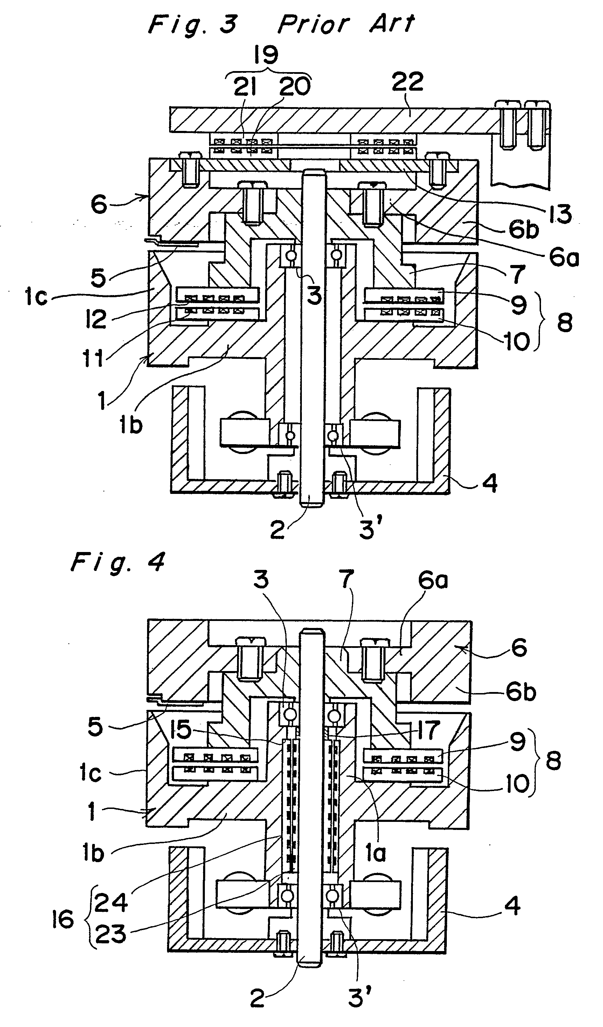

In view of the foregoing, the use of a plurality of rotary transformers is currently practiced such as disclosed in, for example, the Japanese Laid-open Patent Publication No.62-76003 published April 8, 1987. Another prior art design in which the plural rotary transformers are employed is shown in Fig. 3, reference to which will now be made.

The head carrier drum assembly shown in Fig. 3 is essentially similar to that shown in Fig. 1, except that an additional rotary transformer generally identified by 19 is employed. The additional rotary transformer 19 shown therein comprises an annular rotor core 20 mounted on the rotary drum 6 which is in turn mounted on the rotary drum 6 for rotation together therewith through a support table 13 and an annular stator core 21 carried by a support arm 22 immediately above the rotor core 20 and in coaxial relation with the rotor core 20, which support arm 22 is in turn rigidly secured to a machine framework (not shown). The rotor and stator cores 20 and 21 of the additional rotary transformer 19 is substantially similar in structure to the rotor and stator cores 9 and 10 of the rotary transformer 8 and have therefore their own windings embedded therein.

While any one of the rotary transformers 8 and 10 used in the head carrier drum assembly shown in Fig. 3 lies generally horizontal and perpendicular to the drive shaft 2 and may possibly be referred to as a flat annular rotary transformer and the rotary transformer 8 shown in Fig. 2 surrounds the drive shaft 2 and may possibly be referred to as a cylindrical rotary transformer, it is also well known that some commercially available magnetic tape players employ the head carrier drum assembly wherein a combination of one or more flat annular rotary transformers with one or more cylindrical rotary transformer is employed. Again, the previously mentioned Japanese patent publication discloses the use of the flat annular rotary transformers in combination with the cylindrical rotary transformers.

It has, however, been found that, in the design wherein an additional rotary transformer is provided at any location above the rotary drum such as shown in Fig. 3, the head carrier drum assembly tends to become bulky, causing the magnetic recording and/or reproducing apparatus itself to become bulky with increased mass. This poses a problem in that the assembly of the apparatus is complicated with an increased number of component parts assembled at an increased number of manufacturing steps.

On the other hand, in the design wherein the annular flat rotary transformer is employed in combination with the cylindrical rotary transformer, the head carrier drum assembly tends to become complicated, causing the magnetic recording and/or reproducing apparatus itself to become bulky. Moreover, should the number of the channels be desired to be increased to a value greater than a predetermined number, a problem will arise as to how and where one or more additionally employed rotary transformers should be installed because the surface area of each of the stator and rotor cores of the or each rotary transformer is limited and very narrow, and there will be no other way than to install them above the rotary drum in a manner similar to that shown in Fig. 3 or any other location.

In any event, where the additional rotary transformer is installed above the rotary drum such as shown in Fig. 6, the stator core of the additional rotary transformer has to be supported in no way other than in a cantilever fashion because the length of magnetic tape travels around the head carrier drum assembly. The cantilever support system makes it difficult to adjust the gap between the stator and rotor cores of the additional rotary transformer to a highly precisely controlled value, or otherwise an expensive and complicated gap adjusting mechanism is required. The employment of the gap adjusting mechanism renders the magnetic recording and/or reproducing apparatus to be bulky and heavy.

Apart from the prior art head carrier drum assemblies hereinbefore discussed, the Japanese Laid-open Utility Model Publication No.58-68015, published in 1983, discloses the use of two cylindrical rotary transformers mounted between rotary and stationary members of the drum assembly in coaxial relationship with each other. In this example, since the cylindrical rotor core of the inner rotary transformer is mounted on the outer peripheral surface of a tubular member rotatable together with the rotary member of the drum assembly, the space for installation of the rotor core of the inner rotary transformer is limited by the presence of the tubular member. Where the space for installation of the rotor core of the inner rotary transformer is desired to be increased, the increase in space in turn results in an increase of the size of the head carrier drum assembly as a whole.


SUMMARY OF THE INVENTION

Accordingly, the present invention has been devised with a view to substantially eliminating the above discussed problems inherent in the prior art head carrier drum assemblies and has for its essential object to provide an improved head carrier drum assembly wherein an increased number of rotary transformers are installed without the size thereof substantially increased.

To this end, the present invention provides an improved head carrier drum assembly which comprises a motor-coupled drive shaft, upper and lower drums of equal outer diameter supported one above the other for rotation in one direction relative to each other, one of said upper and lower drums being mounted on the drive shaft for rotation together therewith, at least one magnetic transducing head carried by said one of the upper and lower drums for rotation together therewith, and a cylindrical rotary transformer including cylindrical rotary and stator cores for electrically interfacing between the magnetic transducing head and an external electric circuit. The other of the upper and lower drums has a cylindrical center sleeve integral therewith and extending in coaxial relation with the drive shaft and is mounted on the drive shaft in closely adjoining and coaxial relationship with said one of the upper and lower drums through at least two radial bearings. The radial bearings are interposed between the outer peripheral surface of the drive shaft and the inner peripheral surface of the sleeve and positioned adjacent opposite ends of the sleeve.

In accordance with the present invention, the cylindrical stator core of the rotary transformer is fitted to the inner peripheral surface of the sleeve and extends between the radial bearings and the cylindrical rotor core of the same rotary transformer is mounted direct on the peripheral surface of the drive shaft in opposition to the stator core.

According to the present invention, the gap delimited between the sleeve and the drive shaft and extending between the radial bearings which has hitherto been considered a dead space is effectively and efficiently utilized to accommodate the cylindrical rotary transformer and, therefore, the head carrier drum assembly can be assembled compact and lightweight. Where one or more rotary transformers are employed in addition to the cylindrical rotary transformer accommodated in the gap between the sleeve and the drive shaft, the number of channels for transmission of signals can be correspondingly increased.


BRIEF DESCRIPTION OF THE DRAWINGS

These and other objects and features of the present invention will become clear from the following description taken in conjunction with the preferred embodiment thereof with reference to the accompanying drawings, in which:

Figs. 1 to 3 are schematic longitudinal sectional views showing the different prior art head carrier drum assemblies; and

Fig. 4 is a schematic longitudinal sectional view showing a head carrier drum assembly embodying the present invention.


DETAILED DESCRIPTION OF THE INVENTION

Before the description of the present invention proceeds, it is to be noted that like parts are designated by like reference numerals throughout the accompanying drawings. It is also to be noted that, for the sake of brevity, the present invention will be described as applied to the head carrier drum assembly shown in and described with reference to Fig. 1.

Referring now to Fig. 4, apart from the flat annular rotary transformer 8 supported and positioned in the manner as hereinbefore described with reference to Fig. 1, a cylindrical rotary transformer generally identified by 16 is employed and positioned in the gap delimited between the inner peripheral surface of the cylindrical center sleeve 1a and the drive shaft 2 while extending between the radial bearings 3 and 3′.

This cylindrical rotary transformer 16 comprises a cylindrical rotor core 23 having windings embedded therein and a cylindrical stator core 24 having windings embedded therein. The cylindrical rotor core 23 is mounted on a portion of the drive shaft 2 between the radial bearings 3 and 3′ for rotation together therewith with the embedded winding thereof oriented towards the cylindrical center sleeve 1a, whereas the cylindrical stator core 24 is inserted into and held in position within the hollow of the cylindrical center sleeve 1a with the embedded windings thereof confronting the windings in the cylindrical rotor core 23. As a matter of course, the spacing between the outer peripheral surface of the cylindrical rotor core 23 and the inner peripheral surface of the cylindrical stator core 24 is highly precisely controlled to a required value.

The manner in which the cylindrical rotary transformer 16 is installed around the drive shaft and inside the cylindrical center sleeve 1a will be described hereinafter.

At the outset, the upper radial bearing 3 is mounted in an upper end of the cylindrical center sleeve 1a in the lower drum 1, and the drive shaft 2 having an upper end thereof rigidly coupled with the upper drum 6 in the manner as hereinbefore described in connection with Fig. 1 is subsequently inserted through an inner race of the upper radial bearing 3 so as to extend completely through the cylindrical center sleeve 1a.

Thereafter, the cylindrical stator core 24 of the cylindrical rotary transformer 16 is pressed into the hollow of the cylindrical center sleeve 1a from below, i.e., from the side of a lower end of the cylindrical center sleeve 1a, until an upper end of the cylindrical stator core 24 is brought into engagement with a step 15 defined in the inner peripheral surface of the cylindrical center sleeve 1a, followed by an application of a bonding agent to fix the cylindrical stator core 24 in position inside the cylindrical center sleeve 1a.

Following the insertion of the cylindrical stator core 24 described above, a positioning and spacer ring 17 of an outer diameter undersized relative to the step 15 within the hollow of the cylindrical center sleeve 1a is mounted onto the drive shaft 2 and is allowed to slide along the drive shaft 2 towards the upper radial bearing 3, followed by the mounting of the cylindrical rotor core 23 onto the drive shaft 2 from below until an upper end of the cylindrical rotor core 23 is brought into engagement with the positioning and spacer ring 17. Thereafter, a bonding agent is applied to fix the cylindrical rotor core 23 in position on the drive shaft 2.

After the mounting of the cylindrical transformer 16, the lower radial bearing 3′ is mounted on the drive shaft 2 from below to mark a position between the drive shaft 2 and the cylindrical center sleeve 1a and in the vicinity of the lower end of the cylindrical center sleeve 1a.

Although the present invention has been fully described in connection with the preferred embodiment thereof with reference to the accompanying drawings, it is to be noted that various changes and modifications are apparent to those skilled in the art. For example, the head carrier drum assembly embodying the present invention may have one or more additional rotary transformers of either cylindrical configuration or flat annular configuration, or a combination thereof. Also, instead of the flat annular rotary transformer 8, a cylindrical rotary transformer separate from the cylindrical rotary transformer 16 may be employed and positioned within a gap delimited between the mount 7 and the cylindrical center sleeve 1a.

Again, the use of the flat annular rotary transformer 8 is not always essential in the practice of the present invention.

Accordingly, such changes and modifications are to be understood as included within the scope of the present invention as defined by the appended claims unless they depart therefrom.

## Claims

1. A head carrier drum assembly in a magnetic tape recording and/or reproducing apparatus, which assembly comprises:
a motor-coupled drive shaft (2);
upper and lower drums (6,1) of equal outer diameter supported one above the other for rotation in one direction relative to each other, one (6) of said upper and lower drums being mounted on the drive shaft for rotation together therewith, the other (1) of the upper and lower drums having a cylindrical center sleeve (1a) integral therewith and extending in coaxial relation with the drive shaft, said other of the upper and lower drum being rotatably mounted on the drive shaft in closely adjoining and coaxial relationship with said one of the upper and lower drums through at least two spaced apart radial bearings (3, 3′);

at least one magnetic transducing head (5) carried by said one of the upper and lower drums for rotation together therewith; and

a rotary transformer (16) including cylindrical rotor and stator cores (23, 24) for electrically interfacing between the magnetic transducing head and an external electric circuit;

said radial bearings being interposed between an outer peripheral surface of the drive shaft and an inner peripheral surface of the sleeve and positioned respectively adjacent opposite ends of the sleeve;

said cylindrical stator core (24) of the rotary transformer being fitted to the inner peripheral surface of the sleeve while extending between the radial bearings and the cylindrical rotor core (23) of said rotary transformer being mounted directly on the peripheral sur face of the drive shaft in face-to-face relationship with the stator core.

2. The assembly as claimed in claim 1, wherein said one of the upper and lower drums is the upper drum (6) and said other of the upper and lower drum is the lower drum (1).

Fig. 1 Prior Art

Fig. 2 Prior Art

Fig. 3    Prior Art

Fig. 4